# EUROPÄISCHE PATENTSCHRIFT

(11) **EP 1 020 647 B1**
(45) Veröffentlichungstag und Bekanntmachung des Hinweises auf die Patenterteilung: **09.06.2004**
(21) Anmeldenummer: 99810023.4
(22) Anmeldetag: 14.01.1999
(51) Int. Cl.: F15B 13/042, F16K 31/383

(54) **Plattenventil**
Plate valve
Soupape à plaque

(43) Veröffentlichungstag der Anmeldung: 19.07.2000
(73) Patentinhaber: ALSTOM Technology Ltd, 5400 Baden (CH)
(72) Erfinder: Frey, Heinz, 5737 Menziken (CH); Prochazka, Kamil, 5210 Windisch (CH); Suter, Franz, 5412 Gebenstorf (CH)

(56) Entgegenhaltungen:
- EP-A- 0 631 056
- FR-A- 2 284 813
- GB-A- 2 123 531

## Beschreibung

### TECHNISCHES GEBIET

Die Erfindung betrifft ein Plattenventil gemäss dem Oberbegriff des Anspruchs 1.

### STAND DER TECHNIK

Aus EP 0 631 056 ist ein Plattenventil für einen Stellantrieb eines Regelventils gemäß Oberbegriff des Anspruchs 1 bekannt. Das Plattenventil weist eine obere Öffnung auf, in welcher sich Öl befindet. Die obere Öffnung, welche mit einem Antriebsvolumen verbunden ist, führt in der Mitte des Ventils zu einer Platte, welche auf einer Feder gelagert ist und welche das Antriebsvolumen von einem Federraum trennt. Das Ende der oberen Öffnung bildet ein zylindrisch ausgebildeter Dichtungssitz. Der Federraum unterhalb der Platte steht durch eine Öffnung und eine Leitung mit einem Proportionalventil in Wirkverbindung. Wird der Druck mittels des Proportionalventils im Federraum unterhalb der Platte gesenkt, senkt sich die Platte durch den relativ höheren Druck des Öls, welches sich oberhalb der Platte in der oberen Öffnung befindet, nach unten. Dadurch wird der Weg für das Öl freigegeben, welches von der oberen Öffnung vorbei an der Platte durch Öffnungen strömen kann, die, über den Umfang verteilt, um den zylindrisch ausgebildeten Dichtungskopf herum abgeordnet sind. In dieser Stellung ist das Plattenventil geöffnet. Um das seitliche Austreten des Öls von der Platte zum Federraum zu verhindern, befindet sich zwischen dem Rand der Platte und dem Gehäuse ein Dichtungsteil. Das Plattenventil wird wieder geschlossen, indem der Druck unterhalb der Platte durch das Proportionalventil erhöht wird. Durch den relativen Druckunterschied hebt sich die Platte wieder und verhindert dadurch den Fluss des Öls von der oberen Öffnung zu den um den Umfang des Dichtungssitzes angeordneten Öffnungen. Es gibt dann einen Fluss des Öls vom Federraum zur oberen Öffnung durch Blenden, welche sich in der Platte befinden.

Ein wichtiger Faktor für die Auslegung eines Plattenventils ist das Dichtflächenverhältnis λ₁=A₂/A₁, wobei A₂ die untere Wirkfläche und A₁ die obere Wirkfläche der Platte ist, an denen der Druck angreifen kann. Es bestimmt im wesentlichen die dynamischen Eigenschaften eines Plattenventils. Ein kleines Dichtflächenverhältnis λ₁ bedeutet eine bessere dynamische Eigenschaft des Ventils, bringt aber den Nachteil mit sich, dass der Durchmesser der Platte und damit der des ganzen Ventils steigt. Das in EP 0 631 056 beschriebene Plattenventil weist diesen Nachteil auf. Insbesondere bei der Auslegung eines Plattenventils für einen Stellantrieb eines Regelventils, welches bei einem Notstopp der Anlage sehr schnell geschlossen werden muss, hat ein so konstruiertes Plattenventil des Stellantriebs einen sehr grossen Durchmesser und ist dadurch in der Herstellung sehr teuer.

### DARSTELLUNG DER ERFINDUNG

Die Erfindung löst die Aufgabe, ein Plattenventil zu konstruieren, welches für eine sehr schnelle Dynamik ausgelegt ist. Das Plattenventil soll aber trotzdem einen kleinen Durchmesser aufweisen, um die teure Herstellung des Ventils mit einem grossen Durchmesser zu vermeiden.

Erfindungsgemäss wird die Aufgabe dadurch gelöst, dass das Plattenventil eine zusätzliche Platte aufweist, wobei sich diese zusätzliche Platte unterhalb der Platte auf der Seite befindet, die dem Zulauf abgewandt und dem Federraum zugewandt ist, die zusätzliche Platte Blenden aufweist, und sich in der Platte unterhalb des Ablaufs Ausströmöffnungen befinden.

Das erfindungsgemässe Plattenventil hat den Vorteil, dass es trotz eines vergleichsweisen kleinen Durchmessers gute dynamische Eigenschaften aufweist. Die zusätzliche Platte, welche ein kleineres Dichtflächenverhältnis λ₁ und damit eine bessere Dynamik als die Platte hat, hilft der Platte bei der Öffnung des Ventils. Die zusätzliche Platte wirkt als Verstärker für diese Platte. Auf diese Weise wird eine schnelle Dynamik des Ventils erreicht, ohne dass - um ein kleineres Dichtflächenverhältnis λ₁ zu erzielen - der Durchmesser des Ventils vergrössert werden muss.

Die weiteren Ausgestaltungsmöglichkeiten sind Gegenstände der abhängigen Patentansprüche.

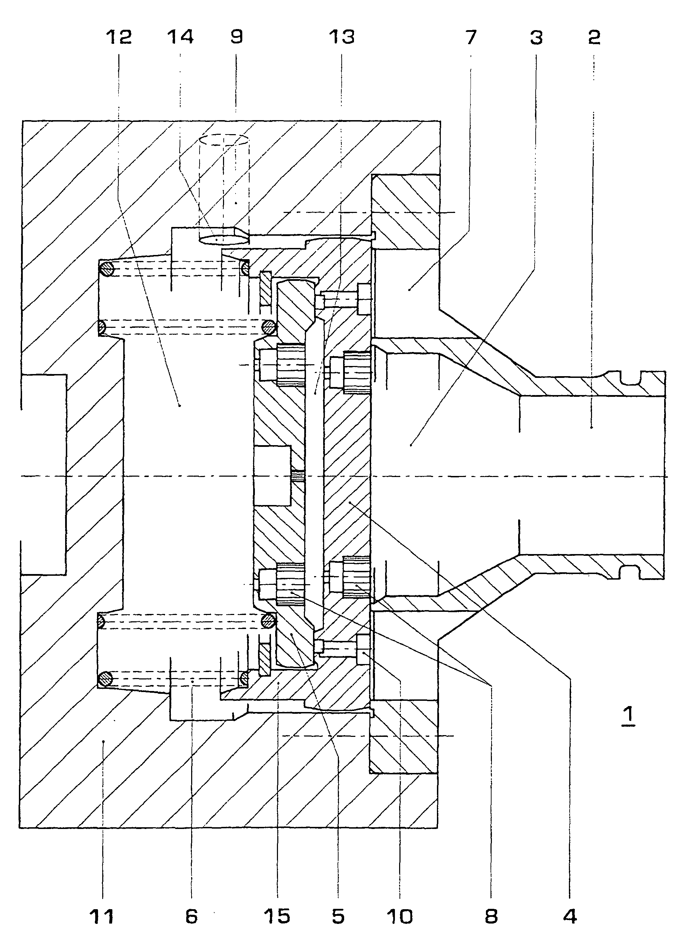

### KURZE BESCHREIBUNG DER ZEICHNUNG

Die einzige Figur zeigt einen Schnitt durch eine Ausführungsform eines erfindungsgemässen Plattenventils.

Es werden nur die für die Erfindung wesentlichen Elemente dargestellt.

### WEGE ZUR AUSFÜHRUNG DER ERFINDUNG

Die einzige Figur zeigt schematisch eine Ausführungsform eines erfindungsgemässen Plattenventils 1 in geschlossenem Zustand, wie es bei einem Stellantrieb für ein Regelventil verwendet wird. Das Gehäuse 11 weist einen Zulauf 2 auf, welcher an ein nicht dargestelltes Antriebsvolumen für das Regelventil angeschlossen ist. Der Zulauf 2 endet in einem Dichtungssitz 3, welcher zylindrisch ausgebildet ist, und welcher an eine Platte 4 grenzt. In der Platte 4 befinden sich unterhalb des Zulaufs 2 und des Dichtungssitzes 3 Blenden 8. Die Blenden 8 haben einen verhältnismässig kleinen Durchmesser. Um den Dichtungssitz 3 des Zulaufs 2 sind über den Umfang verteilt die Öffnungen des Ablaufs 7 angeordnet. In der Platte 4 befinden sich unterhalb der Öffnungen des Ablaufs 7 Ausströmöffnungen 10. Diese Ausströmöffnungen 10 haben im Vergleich mit dem Durchmesser der Blenden 8 einen grösseren und im Vergleich mit den Öffnungen des Ablaufs 7 einen kleineren Durchmesser. Auf der dem Zulauf 2 abgewandten Seite der Platte 4 ist eine zusätzliche Platte 5 angeordnet. Diese zusätzliche Platte 5 verschliesst im geschlossenen Zustand die Ausströmöffnungen 10 der Platten 4 mit ihrem äusseren Rand. Zwischen der Platte 4 und der zusätzlichen Platte 5 entsteht, etwa unterhalb des Zulaufs 2, mittig ein Zwischenraum 13. In der zusätzlichen Platte 5 befinden sich unterhalb des Zulaufs 2 ebenso wie in der Platte 4 Blenden 8, welche in Verbindung mit dem Zwischenraum 13 stehen. Die zusätzliche Platte 5 wird seitlich von unteren Ausläufern 15 der Platte 4 begrenzt. Auf der dem Zwischenraum 13 abgewandten Seite der zusätzlichen Platte 5 befindet sich ein Federraum 12, in welchen auch die Ausläufer 15 der Platte 4 ragen. Beide Platten 4,5 werden auf der gegenüberliegenden Seite des Gehäuses 11 mit Federn 6 befestigt. Die Federn 6 sind am Ausläufer 15 der Platte 4 bzw. am äusseren Rand der zusätzlichen Platte 5 angebracht. In einer zweiten, nicht dargestellten Ausführungsform ist die Feder 6 der zusätzlichen Platte 5 an den Ausläufern 15 der Platte 4 angebracht. Der Federraum 12 steht über eine Öffnung 14 und eine Leitung 9 in Verbindung mit einem nicht dargestellten handelsüblichen Proportionalventil.

Die einzige Figur zeigt das Plattenventil 1 in geschlossenem Zustand. Im Zulauf 2 befindet sich Öl mit einem bestimmten Druck p₁. Um das Plattenventil zu öffnen wird der Druck p₂ im Federraum 12 durch das nicht dargestellte Proportionalventil gegenüber dem Druck p₁, welcher im Zulauf 2 herrscht, schlagartig herabgesetzt, wobei bei der Drucksenkung Δp₁ = λ₁*p₂-p₁ das Dichtflächenverhältnis λ₁ einzubeziehen ist. Dies hat zur Folge, dass vom Zulauf 2 durch die Blenden 8 der Platte 4, durch den Zwischenraum 13 und weiter durch die Blenden 8 der zusätzlichen Platte 5 in den Federraum 12 ein kleine Strömung entsteht. In der Folge der Druckminderung des Drucks p₂ im Federraum 12 senkt sich zunächst die zusätzliche Platte 5. Nachdem sich die zusätzliche Platte 5 gesenkt hat, werden die Ausströmöffnungen 10 der Platte 4, welche vorher vom Rand der zusätzlichen Platte 5 bedeckt waren, freigegeben. Da der Durchmesser der Ausströmöffnungen 10 grösser ist als der Durchmesser der Blenden der zusätzlichen Platte 5, entsteht eine leichte Strömung vom Zulauf 2 durch die Blenden 8 der Platte 4, weiter über die Ausströmöffnungen 10 der Platte 4 zum Ablauf 7. Der Zwischenraum 13 ist in diesem Stadium durch die Abwärtsbewegung der zusätzlichen Platte 5 etwas vergrössert. Im Zwischenraum 13 verkleinert sich der Druck jetzt durch die Strömung des Öls durch die Ausströmöffnungen 10. Zwischen dem Zulauf 2 und dem Zwischenraum 13 entsteht eine Druckdifferenz, welche zum Absenken der Platte 4 führt und damit zur Freigabe des Ablaufs 7 durch die Platte 4. Das Öl kann nun ungehindert vom Zulauf 2 zu den Öffnungen des Ablaufs 7 strömen, da der Durchmesser der Öffnungen des Ablaufs 7 sehr viel grösser ist als der Durchmesser der Blenden 8. Das Plattenventil 1 ist nun geöffnet. Da der Öffnungsvorgang des Plattenventils im Miilisekundenbereich liegt, sind die beschriebenen Zwischenzustände nur als Anhaltspunkte eines idealisierten Öffnungsvorgangs zu betrachten.

Zum Schliessen des Plattenventils 1 wird der Druck p₂ im Federraum 12 mittels des nicht dargestellten Proportionalventils wieder erhöht. Durch eine positive Druckdifferenz Δp₁=λ₁*p₂-p₁ zwischen dem Druck p₁ des Zulaufs 2 und dem Druck p₂

Federraum 12 hebt sich die zusätzliche Platte 5 und gleichzeitig die Platte 4. Die Platte 4 verdeckt mit den Ausströmöffnungen 10 den Ablauf 7 und die zusätzliche Platte 5 mit ihrem äusseren Rand wiederum diese. Das Plattenventil 1 ist geschlossen. Es kann nun eine Strömung vom Federraum 12 durch die Blenden 8 und den Zwischenraum 13 zum Zulauf 2 entstehen.

Die zusätzliche Platte 5 wirkt wie ein Verstärker für die Platte 4. Die dynamischen Eigenschaften des Plattenventils 1 verbessern sich dadurch wesentlich, obwohl das Dichtflächenverhältnis λ₁ der Platte 4 relativ gross und der Durchmesser relativ klein ist. Das Dichtflächenverhältnis λ₁ der zusätzlichen Platte 5 ist im Vergleich zur Platte 4 kleiner und sie ist damit dynamischer. Das erfindungsgemässe Plattenventil 1 ist durch die verbesserten dynamischen Eigenschaften insbesondere dann geeignet, wenn ein Stelltrieb für ein Regelventil dafür ausgelegt werden soll, dass es bei einem Notstopp sehr schnell zu schliessen ist. Durch den kleinen Durchmesser vermeidet es eine teure Konstruktion eines Plattenventils aus dem Stand der Technik mit sehr grossem Durchmesser bei gleichen dynamischen Eigenschaften.

### BEZUGSZEICHENLISTE

- **1**: Plattenventil
- **2**: Zulauf
- **3**: Dichtungssitz
- **4**: Platte
- **5**: zusätzliche Platte
- **6**: Feder
- **7**: Ablauf
- **8**: Blende
- **9**: Leitung
- **10**: Ausströmöffnung
- **11**: Gehäuse
- **12**: Federraum
- **13**: Zwischenraum
- **14**: Öffnung
- **15**: Ausläufer

## Patentansprüche

1. Plattenventil (1), bestehend aus einem Gehäuse (11), aus mindestens einem Zulauf (2), aus mindestens einem Ablauf (7), einem Federraum (12) und aus einer Platte (4), in welcher sich Blenden (8) befinden,
**dadurch gekennzeichnet, dass**
- das Plattenventil (1) eine zusätzliche Platte (5) aufweist, wobei sich diese zusätzliche Platte (5) unterhalb der Platte (4) auf der Seite befindet, die dem Zulauf (2) abgewandt und dem Federraum (12) zugewandt ist,
- die zusätzliche Platte (5) Blenden (8) aufweist, und
- sich in der Platte (4) unterhalb des Ablaufs (7) Ausströmöffnungen (10) befinden.

2. Plattenventil nach Anspruch 1,
**dadurch gekennzeichnet, dass**
sich zwischen der Platte (4) und der zusätzlichen Platte (5) ein Zwischenraum (13) befindet.

3. Plattenventil nach Anspruch 2,
**dadurch gekennzeichnet, dass**
die Platte (4) und die zusätzliche Platte (5) je mit mindestens einer Feder (6), welche sich im Federraum (12) befindet, auf der dem Zulauf (2) abgewandten Seite der Platten (4),(5) am Gehäuse (11) befestigt sind.

4. Plattenventil nach Anspruch 3,
**dadurch gekennzeichnet, dass**
die Platte (4) und die zusätzliche Platte (5) je mit zwei Federn (6), welche sich im Federraum (12) befindet, auf der dem Zulauf (2) abgewandten Seite der Platten (4),(5) am Gehäuse (11) befestigt sind.

## Claims

1. Plate valve (1) comprising a housing (11), at least one inlet (2), at least one outlet (7), a spring space (12) and a plate (4) in which there are orifice plates (8), **characterized in that**
- the plate valve (1) has an additional plate (5), this additional plate (5) being situated below the plate (4), on the side facing away from the inlet (2) and facing the spring space (12),
- the additional plate (5) has orifice plates (8) and
- there are outflow openings (10) in the plate (4) below the outlet (7).

2. Plate valve according to Claim 1, **characterized in that** there is an interspace (13) between the plate (4) and the additional plate (5).

3. Plate valve according to Claim 2, **characterized in that** the plate (4) and the additional plate (5) are each secured on the housing (11) on the side of the plates (4), (5) facing away from the inlet (2) by at least one spring (6), which is situated in the spring space (12).

4. Plate valve according to Claim 3, **characterized in that** the plate (4) and the additional plate (5) are each secured on the side of the plates (4), (5) facing away from the inlet (2) by two springs (6), which is situated in the spring space (12).

## Revendications

1. Soupape à plaque (1) se composant d'un carter (11), d'au moins une entrée (2), d'au moins une sortie (7), d'un espace de ressort (12) et d'une plaque (4), dans laquelle se trouvent des diaphragmes (8),
**caractérisée en ce que**
- la soupape à plaque (1) présente une plaque supplémentaire (5), cette plaque supplémentaire (5) se trouvant sous la plaque (4) du côté opposé à l'entrée (2) et tourné vers l'espace de ressort (12),
- la plaque supplémentaire (5) présente des diaphragmes (8) et
- des ouvertures d'évacuation (10) se trouvent dans la plaque (4) sous la sortie (7).

2. Soupape à plaque selon la revendication 1,
**caractérisée en ce qu'**
un espace intermédiaire (13) se trouve entre la plaque (4) et la plaque supplémentaire (5).

3. Soupape à plaque selon la revendication 2,
**caractérisée en ce que**
la plaque (4) et la plaque supplémentaire (5) sont fixées au carter (11) à chaque fois avec au moins un ressort (6), qui se trouve dans l'espace de ressort (12), du côté des plaques (4), (5) opposé à l'entrée (2).

4. Soupape à plaque selon la revendication 3,
**caractérisée en ce que**
la plaque (4) et la plaque supplémentaire (5) sont fixées au carter (11) à chaque fois avec deux ressorts (6) qui se trouvent dans l'espace de ressort (12), du côté des plaques (4), (5) opposé à l'entrée (2).
